# FASCICULE DE BREVET EUROPEEN

(11) **EP 2 315 388 B1**
(45) Date de publication et mention de la délivrance du brevet: **01.04.2015**
(21) Numéro de dépôt: 10187873.4
(22) Date de dépôt: 18.10.2010
(51) Int. Cl.: H04L 9/06

(54) **Procédé sécurisé de calcul cryptographique et composant électronique correspondant.**
Gesichertes Verfahren zur kryptografischen Berechnung, und entsprechende elektronische Komponente
Secured method for cryptographic calculation and corresponding electronic component.

(30) Priorité: 20.10.2009 FR 0957343
(43) Date de publication de la demande: 27.04.2011
(73) Titulaire: STMicroelectronics (Rousset) SAS, 13790 Rousset (FR)
(72) Inventeur: Teglia, Yannick, 13720, La Bouilladisse (FR)
(74) Mandataire: Zapalowicz, Francis

(56) Documents cités:
- EP-A1- 2 280 511
- WO-A1-00/41356
- GOUBIN L ET AL: "DES AND DIFFERENTIAL POWER ANALYSIS THE DUPLICATION METHOD", CRYPTOGRAPHIC HARDWARE AND EMBEDDED SYSTEMS. 1ST INTERNATIONAL WORKSHOP, CHES'99. WORCESTER, MA, AUG. 12 - 13, 1999 PROCEEDINGS; [LECTURE NOTES IN COMPUTER SCIENCE], BERLIN : SPRINGER, DE, vol. 1717, 1 août 1999 (1999-08-01), pages 158-172, XP000952192, ISBN: 978-3-540-66646-2
- CATHERINEH GEBOTYS ET AL: "EM Analysis of Rijndael and ECC on a Wireless Java-Based PDA", 1 janvier 2005 (2005-01-01), CRYPTOGRAPHIC HARDWARE AND EMBEDDED SYSTEMS - CHES 2005 LECTURE NOTES IN COMPUTER SCIENCE;;LNCS, SPRINGER, BERLIN, DE, PAGE(S) 250 - 264, XP019017435, ISBN: 9783540284741 * end of page 251, beginning of page 252 1st paragraph of appendix 1 *

## Description

L'invention concerne la sécurisation des calculs cryptographiques, notamment mais non exclusivement ceux effectués dans les cartes à puce.

L'invention concerne plus particulièrement la protection des outils de calcul cryptographique contre les attaques à base de « modèles » et bien connues de l'homme du métier sous la dénomination anglosaxonne de « template attacks », et tout particulièrement les outils de calcul cryptographique qui ont déjà été protégés contre des attaques utilisant une analyse différentielle de consommation, et bien connues de l'homme du métier sous la dénomination anglosaxonne de « Differential Power Analysis » (DPA).

Les cartes à puce interagissent avec l'environnement extérieur dans un mode producteur/consommateur. Par exemple, une carte à puce consomme de l'énergie tirée d'une alimentation électrique et produit des rayonnements électromagnétiques. La consommation électrique et les rayonnements électromagnétiques sont corrélés puisque l'émission électromagnétique dépend de la consommation d'énergie. Par ailleurs, on sait que la consommation électrique d'un dispositif est également une image des opérations de traitement effectuées à l'intérieur de ce dispositif. Par conséquent, l'analyse de la consommation peut révéler un code et des données d'un dispositif électronique lorsque celui-ci est en fonctionnement. Ces données peuvent être des données secrètes comme par exemple une clé secrète utilisée dans un calcul cryptographique.

Dans le but de déterminer des clés secrètes, les cartes à puce sont susceptibles de faire l'objet de plusieurs types d'attaques. Parmi celles-ci, les attaques dites DPA, sont basées sur l'étude des corrélations entre une variable intermédiaire du logiciel cryptographique implémenté dans le composant électronique, et les valeurs de consommation électrique de ce composant. De telles attaques statistiques ont montré qu'elles étaient plus efficaces que les attaques classiques basées sur la seule analyse de consommation, comme par exemple les attaques du type SPA (Single Power Analysis).

Pour contrecarrer de telles attaques DPA, des contre-mesures ont été développées qui consistent à casser lesdites corrélations. Plus précisément, un aléa secret est inséré au niveau algorithmique de telle sorte que deux traitements identiques avec la même donnée vont fournir des consommations de courant différentes en raison de l'utilisation de ces aléas. Les nombres aléatoires sont mélangés avec les données (éventuellement avec la clé secrète) avant le traitement, ce qui nécessite également une modification logicielle ou matérielle de l'outil cryptographique original, et ensuite, le traitement s'effectue sur les données aléatorisées. De ce fait, les études statistiques ne montrent plus de corrélation et les attaques du type DPA deviennent alors inefficaces.

Cela étant, de nouveaux types d'attaques ont été développées, qui consistent à contrecarrer le générateur de nombres aléatoires. Ces attaques, connues par l'homme du métier sous la dénomination anglosaxonne de « template attacks » visent à caractériser le générateur de nombres aléatoires soit avant l'étape d'encryptage, soit durant cette étape d'encryptage, pour déterminer par exemple certains au moins de ses défauts, comme par exemple le biais, qui le différencient d'un générateur de nombres aléatoires théorique parfait.

De telles attaques nécessitent pour le fraudeur, d'avoir accès au composant vierge (c'est-à-dire ne contenant pas de clé ou de données), ou à un composant expérimental identique, ou bien à un composant de la même famille incorporant un générateur de nombres aléatoires comparable, que le fraudeur peut ensuite programmer à sa guise. Ainsi, le fraudeur peut effectuer des mesures par différents moyens de façon à obtenir un modèle du générateur de nombres aléatoires.

Ensuite, durant la phase d'encryptage effectuée par le logiciel cryptographique implémenté dans le composant, il effectue n fois le même encryptage, c'est-à-dire en utilisant une même clé et une même donnée. De ce fait, la seule modification durant la phase d'encryptage résulte dans les nombres aléatoires utilisés. En effectuant un nombre très important de mesures et en connaissant par exemple le biais et d'autres caractéristiques du générateur de nombres aléatoires, la valeur moyenne des courbes de consommation obtenue pour ladite clé et ladite donnée fournit une courbe de référence. En réitérant ces opérations pour des valeurs différentes de clés et de données, on obtient donc un jeu de courbes de consommation de références ou « modèles » qu'il va être ainsi possible d'utiliser lors de l'analyse de la courbe de consommation du composant réel de façon à pouvoir trouver la clé secrète qu'il contient.

Selon un mode de mise en oeuvre et de réalisation, il est proposé un procédé de calcul cryptographique et un composant visant à rendre plus difficile les attaques du type «template », en particulier en réduisant la possibilité pour l'attaquant d'établir des courbes ou modèles de référence relatives aux données secrètes.

Selon un autre mode de mise en oeuvre et de réalisation, il est également proposé la possibilité de supprimer les générateurs de nombres aléatoires qui, en tant que composants analogiques, sont difficiles à caractériser et à maintenir homogènes en termes de comportement lors de modifications de process ou de fabrication.

Ainsi, selon un mode de mise en oeuvre, on va utiliser ce que connaît l'attaquant, par exemple la donnée d'entrée, pour générer un stimulus secret de façon à ce que l'exécution un grand nombre de fois de l'algorithme de cryptage avec une même donnée et une même valeur de clé donne toujours le même stimulus secret, ce qui va par conséquent rendre inutile tout moyennage en vue d'une attaque potentielle.

Selon un aspect, il est proposé un procédé sécurisé de calcul cryptographique, comprenant un traitement d'une donnée d'entrée par un outil de calcul cryptographique, faisant intervenir au moins une clé de cryptage et au moins une information secrète générée, de façon à fournir une donnée de sortie.

Selon une caractéristique générale de cet aspect, la génération de ladite au moins une information secrète comprend un traitement de ladite donnée d'entrée par au moins un opérateur possédant au moins une caractéristique secrète.

Ainsi, on peut par exemple supprimer le générateur de nombres aléatoires en tant que producteur de la donnée secrète, et le remplacer par un processus déterministe, au moins en partie secret, et alimenté par la donnée d'entrée elle-même qui est connue de l'attaquant. Et c'est ce processus déterministe, de par son caractère au moins en partie secret, qui génère l'information secrète. La génération d'une information secrète reste en effet nécessaire pour contrer des attaques du type DPA, mais sa vulnérabilité est ici considérablement réduite. En effet, même si l'on délivre plusieurs fois une même données d'entrée, il va en résulter la génération d'une information secrète qui sera chaque fois identique. Et, par conséquent, une opération de moyennage ne présente plus d'intérêt pour l'attaquant durant la phase d'encryptage de l'outil cryptographique.

Selon un mode de mise en oeuvre, ledit au moins un opérateur peut comprendre une fonction au moins partiellement secrète, présentant un effet d'avalanche et capable de fournir respectivement à partir de variables d'entrée différentes, des variables de sortie indépendantes et sensiblement uniformément distribuées.

L'opérateur peut ainsi comprendre une fonction de hachage au moins partiellement secrète.

L'outil de calcul cryptographique peut résulter d'une modification d'un outil connu de calcul cryptographique, ladite modification faisant intervenir ladite au moins une information secrète.

Cet outil de calcul cryptographique peut comporter un algorithme de cryptage à clé secrète de type DES ou AES.

Selon un autre aspect, il est proposé un composant électronique comprenant des moyens de génération d'au moins une information secrète et des moyens de calcul cryptographiques configurés pour recevoir une donnée d'entrée et pour délivrer une donnée de sortie à partir de ladite donnée d'entrée, d'au moins une clé de cryptage et de ladite au moins une information secrète.

Selon une caractéristique générale de cet autre aspect, les moyens de génération comprennent des moyens d'entrée pour recevoir ladite donnée d'entrée, des moyens de sortie pour délivrer ladite au moins une information secrète, et au moins un opérateur couplé entre les moyens d'entrée et les moyens de sortie et comportant au moins une caractéristique secrète.

Selon un mode de réalisation, ledit au moins un opérateur comprend une fonction au moins partiellement secrète, présentant un effet d'avalanche, et capable de fournir respectivement à partir de variables d'entrée différentes, des variables de sortie indépendantes et sensiblement uniformément distribuées.

Selon un mode de réalisation, ledit opérateur comprend une fonction de hachage au moins partiellement secrète.

Selon un mode de réalisation, les moyens de calcul cryptographique résultent d'une modification d'un moyen connu de calcul cryptographique, ladite modification faisant intervenir ladite au moins une information secrète.

Selon un mode de réalisation, les moyens de calcul cryptographique comportent un algorithme de cryptage à clé secrète de type DES ou AES.

Selon un autre aspect il est proposé une carte à puce incorporant un composant tel que défini ci avant.

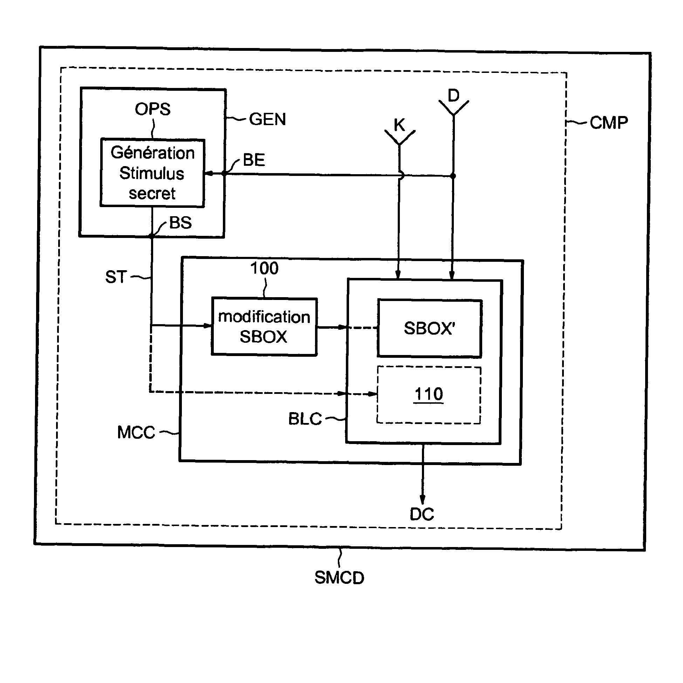

D'autres avantages et caractéristiques de l'invention apparaîtront à l'examen de la description détaillée de modes de mise en oeuvre et de réalisation, nullement limitatifs, et des dessins annexés, sur lesquels la figure unique illustre schématiquement un mode de réalisation d'un composant selon l'invention, permettant un mode de mise en oeuvre d'un procédé selon l'invention.

La référence CMP désigne un composant électronique incorporant des moyens de calcul cryptographiques MCC. Dans l'exemple décrit ici, les moyens de calcul cryptographiques MCC reçoivent en entrée une donnée D ainsi qu'une clé secrète K et fournissent en sortie une donnée cryptée DC. De façon classique et connue en soi, la clé K est secrète car elle est par exemple stockée dans une mémoire protégée du composant CMP.

Le composant CMP est par exemple encarté dans une carte à puce ou microcircuit SMCD communément désigné sous la dénomination anglosaxonne « smart card ».

L'outil de calcul cryptographique mis en oeuvre par les moyens MCC est ici par exemple un algorithme de type DES (Data Encryption Standard) ou AES (Advanced Encryption Standard) bien connus de l'homme du métier. De tels outils de calcul cryptographique utilisent généralement des opérateurs non linéaires couramment désignés par l'homme du métier sous la référence SBOX. Là encore, la structure de tels opérateurs non linéaires est parfaitement connue en soi.

Cela étant, afin notamment d'aléatoriser des variables intermédiaires utilisées dans le calcul cryptographique, l'opérateur linéaire SBOX peut être modifié à l'aide d'un stimulus secret ST (étape 100) de façon à fournir un opérateur linéaire modifié ou masqué SBOX'.

De façon à obtenir en sortie du bloc de calcul BLC mettant en oeuvre les calculs cryptographiques, une donnée cryptée DC identique à celle que l'on aurait obtenue avec un outil de calcul cryptographique non modifié, on peut effectuer un démasquage de clés intermédiaires masquées avec le stimulus secret ST et/ou un démasquage final de la donnée avant délivrance par le bloc de calcul. Ce ou ces démasquages, repéré globalement par la référence 110 peuvent être effectués de façon classique par un ou des opérateurs spécifiques de démasquage ou bien par une ou des autres boîtes SBOX prévues à cet effet.

A titre indicatif mais non limitatif, la modification de l'outil de calcul cryptographique ainsi que la ou les opérations de démasquage peuvent être effectuées sur le chemin de clé comme par exemple décrit dans le brevet européen n° 1 358 733, et/ou sur le chemin de données comme par exemple décrit dans le brevet européen n° 1 358 732.

Le stimulus secret ST est généré par un opérateur OPS de moyens de génération GEN qui reçoivent en entrée BE la donnée d'entrée D.

Puisque la donnée d'entrée est par définition connue, il est donc nécessaire, pour que le stimulus ST généré à la sortie BS des moyens de génération soit secret, que l'opérateur OPS mis en oeuvre au sein des moyens de génération GEN ait au moins une caractéristique secrète.

Cette caractéristique secrète peut résulter par exemple d'une implémentation secrète au sein du circuit intégré supportant le composant CMP, d'une partie au moins de l'opérateur mis en oeuvre au sein des moyens de génération.

Bien que l'on puisse utiliser de nombreux types d'opérateurs au sein des moyens de génération GEN, il est particulièrement intéressant d'utiliser une fonction présentant un effet d'avalanche (c'est-à-dire que la modification d'un bit en entrée de la fonction modifie en moyenne la moitié des bits de sortie) et capable de fournir respectivement, à partir de variables d'entrée différentes, des variables de sortie indépendantes et sensiblement uniformément distribuées.

Une fonction de hachage est un exemple d'une telle fonction.

On rappelle ici qu'une fonction de hachage est une fonction mathématique qui fait correspondre les valeurs d'un grand ou potentiellement très grand ensemble de valeurs à une gamme plus réduite de valeurs. Plus précisément, un mot de n bits en entrée fournira en sortie un mot de m bits avec m très petit par rapport à n. Par ailleurs, chaque bit de la sortie est avantageusement une fonction de tous les bits d'entrée à pondération égale.

Pour rendre secrète l'implémentation de la fonction de hachage, une solution consiste à la modifier légèrement, par exemple en remplaçant un opérateur logique de la fonction de hachage par un autre opérateur logique et d'enfouir cette porte logique modifiée, voire l'ensemble des éléments formant la fonction de hachage, au sein d'autres circuits logiques, communément désignés par l'homme du métier sous la dénomination de « glue logique ».

A titre indicatif, on pourra choisir par exemple une fonction de hachage du type SHA-1, SHA-2 ou du type MD5, bien connue de l'homme du métier et modifiée par exemple comme indiqué ci avant.

On rappelle ici qu'une fonction connue faisant intervenir une variable ou donnée secrète est sensible aux attaques DPA.

Par contre, dans le cas présent, la fonction de hachage est structurellement modifiée de façon secrète.. En conséquence, cette fonction de hachage n'est pas sensible aux attaques DPA.

Par ailleurs, puisque une même donnée d'entrée D génère un même stimulus ST, il devient inutile pour un attaquant, même en réitérant un très grand nombre de fois une opération d'encryptage en utilisant la même donnée d'entrée, d'effectuer des opérations de moyennage durant le process d'encryptage de façon à obtenir un stimulus ST moyenné, qui serait lié à la fonction de hachage.

En effet le seul résultat que pourrait obtenir un attaquant avec un tel moyennage, serait une trace en courant éventuellement exempte de bruit de signal mais qui de toutes façon ne permettrait pas de caractériser cette fonction de hachage modifiée. Une attaque par « modèle » (« template attack ») devient alors très inefficace.

Bien que l'on puisse utiliser une fonction de hachage modifiée, il est également possible d'utiliser au sein des moyens de génération, un autre algorithme de cryptage localement modifié de façon secrète, par exemple un algorithme du type DES ou AES avec un opérateur SBOX modifié secrètement, utilisant une clé secrète qui serait enfouie dans une mémoire protégée. Là encore, une même donnée d'entrée D fournira un même stimulus ST rendant inefficace une attaque par « modèle ». De plus comme la structure modifiée de l'algorithme de cryptage est inconnue d'un attaquant potentiel, elle reste insensible aux attaques DPA.

Cela étant, la fonction de hachage décrite ci avant peut présenter l'avantage d'être plus simplement réalisable dans le composant.

## Revendications

1. Procédé sécurisé de calcul cryptographique, comprenant un traitement d'une donnée d'entrée (D) par un outil de calcul cryptographique faisant intervenir au moins une clé de cryptage (K) et au moins une information secrète générée, de façon à fournir une donnée de sortie (DC), **caractérisé par le fait que** la génération de ladite au moins une information secrète (ST) comprend un traitement de ladite donnée d'entrée par au moins un opérateur (OPS) possédant au moins une caractéristique d'implémentation ou structurelle secrète.

2. Procédé selon la revendication 1, dans lequel ledit au moins un opérateur (OPS) comprend une fonction au moins partiellement secrète, présentant un effet d'avalanche, et capable de fournir respectivement à partir de variables d'entrée différentes, des variables de sortie indépendantes et sensiblement uniformément distribuées.

3. Procédé selon la revendication 1 ou 2, dans lequel ledit opérateur (OPS) comprend une fonction de hachage au moins partiellement secrète.

4. Procédé selon l'une des revendications précédentes, dans lequel l'outil de calcul cryptographique (MCC) résulte d'une modification (100) d'un outil connu de calcul cryptographique, ladite modification faisant intervenir ladite au moins une information secrète (ST).

5. Procédé selon l'une des revendications précédentes, dans lequel l'outil de calcul cryptographique comporte un algorithme de cryptage à clé secrète de type DES ou AES.

6. Composant électronique, comprenant des moyens de génération (GEN) d'au moins une information secrète et des moyens de calcul cryptographique (MCC) configurés pour recevoir une donnée d'entrée et pour délivrer une donnée de sortie à partir de la donnée d'entrée, d'au moins une clé de cryptage et de ladite au moins une information secrète, **caractérisé par le fait que** les moyens de génération (GEN) comprennent des moyens d'entrée (BE) pour recevoir ladite donnée d'entrée (D), des moyens de sortie (BS) pour délivrer ladite au moins une information secrète (ST), et au moins un opérateur (OPS) couplé entre les moyens d'entrée et les moyens de sortie et comportant au moins une caractéristique d'implémentation ou structurelle secrète.

7. Composant selon la revendication 6, dans lequel ledit au moins un opérateur (OPS) comprend une fonction au moins partiellement secrète, présentant un effet d'avalanche, et capable de fournir respectivement à partir de variables d'entrée différentes, des variables de sortie indépendantes et sensiblement uniformément distribuées.

8. Composant selon la revendication 6 ou 7, dans lequel ledit opérateur (OPS) comprend une fonction de hachage au moins partiellement secrète.

9. Composant selon l'une des revendications 6 à 8, dans lequel les moyens de calcul cryptographique (MCC) résultent d'une modification d'un moyen connu de calcul cryptographique, ladite modification faisant intervenir ladite au moins une information secrète.

10. Composant selon l'une des revendications 6 à 9, dans lequel les moyens de calcul cryptographique comportent un algorithme de cryptage à clé secrète de type DES ou AES.

11. Carte à puce, incorporant un composant selon l'une des revendications 6 à 10.

## Patentansprüche

1. Gesichertes Verfahren zur Verschlüsselungsberechnung, das eine Verarbeitung von Eingangsdaten (D) durch ein Verschlüsselungsberechnungswerkzeug, das wenigstens einen Verschlüsselungsschlüssel (K) und wenigstens eine erzeugte geheime Information verwendet, derart, dass Ausgangsdaten (DC) geliefert werden, umfasst, **dadurch gekennzeichnet, dass** die Erzeugung der wenigstens einen geheimen Information (ST) eine Verarbeitung der Eingangsdaten durch wenigstens einen Operator (OPS), der wenigstens eine geheime Implementierungseigenschaft oder strukturelle Eigenschaft besitzt, umfasst.

2. Verfahren nach Anspruch 1, wobei der wenigstens eine Operator (OPS) eine wenigstens teilweise geheime Funktion enthält, die eine Lawinenwirkung aufweist und anhand verschiedener Eingangsvariablen entsprechende unabhängige und im Wesentlichen gleichmäßig verteilte Ausgangsvariablen liefern kann.

3. Verfahren nach Anspruch 1 oder 2, wobei der Operator (OPS) eine wenigstens teilweise geheime Hashing-Funktion enthält.

4. Verfahren nach einem der vorhergehenden Ansprüche, wobei sich das Verschlüsselungsberechnungswerkzeug (MCC) aus einer Modifikation (100) eines bekannten kryptographischen Rechenwerkzeugs ergibt, wobei die Modifikation die wenigstens eine geheime Information (ST) verwendet.

5. Verfahren nach einem der vorhergehenden Ansprüche, wobei das Verschlüsselungsberechnungswerkzeug einen Verschlüsselungsalgorithmus mit geheimem Schlüssel des DES- oder AES-Typs umfasst.

6. Elektronisches Bauteil, das Mittel (GEN) zum Erzeugen wenigstens einer geheimen Information und Mittel (MCC) für eine Verschlüsselungsberechnung, die konfiguriert sind, Eingangsdaten zu empfangen und Ausgangsdaten anhand der Eingangsdaten, wenigstens eines Verschlüsselungsschlüssels und der wenigstens einen geheimen Information zu liefern, umfasst, **dadurch gekennzeichnet, dass** die Erzeugungsmittel (GEN) Eingangsmittel (BE) zum Empfanden der Eingangsdaten (D), Ausgangsmittel (BS) zum Liefern der wenigstens einen geheimen Information (ST) und wenigstens einen Operator (OPS), der zwischen die Eingangsmittel und die Ausgangsmittel geschaltet ist und wenigstens eine geheime Implementierungs- oder Struktureigenschaft besitzt, umfassen.

7. Bauteil nach Anspruch 6, wobei der wenigstens eine Operator (OPS) eine wenigstens teilweise geheime Funktion enthält, die eine Lawinenwirkung aufweist und anhand verschiedener Eingangsvariablen entsprechende unabhängige und im Wesentlichen gleichmäßig verteilte Ausgangsvariablen liefern kann.

8. Bauteil nach Anspruch 6 oder 7, wobei der Operator (OPS) eine wenigstens teilweise geheime Hashing-Funktion enthält.

9. Bauteil nach einem der Ansprüche 6 bis 8, wobei sich die Verschlüsselungsberechnungsmittel (MCC) aus einer Modifikation eines bekannten Verschlüsselungsberechnungsmittels ergeben, wobei die Modifikation die wenigstens eine geheime Information verwendet.

10. Bauteil nach einem der Ansprüche 6 bis 9, wobei die Verschlüsselungsberechnungsmittel einen Verschlüsselungsalgorithmus mit geheimem Schlüssel des DES- oder AES-Typs umfassen.

11. Chipkarte, die ein Bauteil nach einem der Ansprüche 6 bis 10 enthält.

## Claims

1. Secure method for cryptographic computation, comprising processing of an input datum (D) by a cryptographic computation tool involving at least one encryption key (K) and at least one generated item of secret information, so as to provide an output datum (DC), **characterized in that** the generation of the said at least one item of secret information (ST) comprises processing of the said input datum by at least one operator (OPS) having at least one secret structural or implementation characteristic.

2. Method according to Claim 1, in which said at least one operator (OPS) comprises a function that is at least partially secret having an avalanche effect, and capable of providing respectively, based on different input variables, output variables that are independent and substantially uniformly distributed.

3. Method according to Claim 1 or 2, in which the said operator (OPS) comprises an at least partially secret hashing function.

4. Method according to one of the preceding claims, in which the cryptographic computation tool (MCC) results from a modification (100) of a known cryptographic computation tool, the said modification involving the said at least one item of secret information (ST).

5. Method according to one of the preceding claims, in which the cryptographic computation tool comprises an encryption algorithm with a secret key of the DES or AES type.

6. Electronic component, comprising means (GEN) for generating at least one item of secret information and means (MCC) for cryptographic computation configured to receive an input datum and to deliver an output datum based on the input datum, of at least one encryption key and of the said at least one item of secret information, **characterized in that** the generation means (GEN) comprise input means (BE) for receiving the said input datum (D), output means (BS) for delivering the said at least one item of secret information (ST), and at least one operator (OPS) coupled between the input means and the output means and comprising at least one secret structural or implementation characteristic.

7. Component according to Claim 6, in which the said at least one operator (OPS) comprises an at least partially secret function having an avalanche effect and capable of providing respectively, based on different input variables, output variables that are independent and substantially uniformly distributed.

8. Component according to Claim 6 or 7, in which the said operator (OPS) comprises an at least partially secret hashing function.

9. Component according to one of Claims 6 to 8, in which the cryptographic computation means (MCC) result from a modification of a known cryptographic computation means, the said modification involving the said at least one item of secret information.

10. Component according to one of Claims 6 to 9, in which the cryptographic computation means comprise an encryption algorithm with a secret key of the DES or AES type.

11. Smart card incorporating a component according to one of Claims 6 to 10.
